# EUROPÄISCHE PATENTSCHRIFT

(11) **EP 3 112 749 B1**
(45) Veröffentlichungstag und Bekanntmachung des Hinweises auf die Patenterteilung: **14.03.2018**
(21) Anmeldenummer: 16171203.9
(22) Anmeldetag: 25.05.2016
(51) Int. Cl.: F21V 17/16, F21V 23/00, F21V 29/70, F16B 5/06, B61L 5/18, F21W 111/02, F21Y 115/10

(54) **SIGNALGEBER ZUR ABGABE EINES LICHTSIGNALS**
SIGNAL TRANSMITTER FOR DISPENSING A LIGHT SIGNAL
ÉMETTEUR D'UN SIGNAL LUMINEUX

(30) Priorität: 01.07.2015 DE 102015212269
(43) Veröffentlichungstag der Anmeldung: 04.01.2017
(73) Patentinhaber: Siemens Aktiengesellschaft, 80333 München (DE)
(72) Erfinder: Fischer, Friedrich, 83737 Irschenberg (DE)

(56) Entgegenhaltungen:
- AU-A1- 2009 222 549
- DE-A1- 3 328 746
- US-A1- 2004 252 520
- US-A1- 2013 039 044
- US-B1- 6 323 781

## Beschreibung

Die Erfindung betrifft einen Signalgeber zur Abgabe eines Lichtsignals für den Straßen- oder Schienenverkehr nach dem Oberbegriff des Patentanspruches 1.

Zur Verkehrssteuerung an Verkehrswegen ist der Einsatz von Lichtsignalanlagen bekannt, die Signalgeber zur Abgabe von Lichtsignalen aufweisen. Neben der Steuerung des Schienenverkehrs dienen Lichtsignalanlagen vor allem zur Steuerung des Straßenverkehrs an innerstädtischen Knotenpunkten. Hier werden Signalgeber in bis zu drei vertikal aneinander gereihten Feldern angeordnet und auf die herannahenden Verkehrsteilnehmer ausgerichtet an Masten aufgehängt. Dreifeldige Signalgeber geben nach einem in einem Steuergerät der Lichtsignalanlage ablaufenden Signalplan Freigabe- oder Sperrsignale an Verkehrsteilnehmer ab.

Ein derartiger Signalgeber umfasst ein topfförmiges Innengehäuse mit einer Frontöffnung. In dem Innengehäuse sind eine Lichtquelle mit wenigstens einer Leuchtdiode, eine Treiberbaugruppe zur Energieversorgung der Lichtquelle und ein das Innengehäuse wenigstens teilweise auskleidendes Kühlblech zur Wärmeabfuhr angeordnet. Die Frontöffnung ist durch einen Optikaufsatz zur Beeinflussung des von der Lichtquelle emittierten Lichtes verschlossen.

Zur Montage einer Trägerplatte der Treiberbaugruppe am Kühlblech sind mehrteilige Befestigungselemente aus metallischem Werkstoff bekannt. Ein solches Befestigungselement umfasst einen Einpressbolzen, dessen Kopfabschnitt zunächst mit einem gesonderten Werkzeug mit dem Kühlblech verpresst werden muss, eine zwischen Trägerplatte und Kühlblech einzulegende Distanzhülse, die den gewünschten Montageabschnitt hält, sowie eine Mutter und ein Sicherungselement, womit die Trägerplatte am Schaftabschnitt des Einpressbolzens noch zu verschrauben ist. Aus der AU 2009222549 A1 ist ein Signalgeber nach dem Oberbegriff des Anspruches 1 bekannt.

Der Erfindung liegt die Aufgabe zugrunde, einen Signalgeber der eingangs genannten Art bereitzustellen, bei dem die Treiberbaugruppe schnell und kostengünstig am Kühlblech montierbar ist.

Die Aufgabe wird erfindungsgemäß gelöst durch einen Signalgeber der eingangs genannten Art mit den im kennzeichnenden Teil des Patentanspruchs 1 genannten Merkmalen. Demnach ist eine Trägerplatte der Treiberbaugruppe durch wenigstens ein Befestigungselement in einem vorgegebenen Montageabstand parallel zum Kühlblech gehalten. Dabei durchsetzt das Befestigungselement eine erste Montageöffnung im Kühlblech sowie eine kleinere zweite Montageöffnung in der Trägerplatte. Das Befestigungselement besteht aus einem elastischen Kunststoff zur Ausbildung von Schnappverbindungen zwischen dem Befestigungselement und dem Kühlblech einerseits sowie der Trägerplatte andererseits. So ist das Kühlblech mit einem Rand der ersten Montageöffnung in einer ersten Durchmessereinschnürung des Befestigungselements eingeschnappt. Ebenso ist die Trägerplatte mit einem Rand der zweiten Montageöffnung in einer zweiten Durchmessereinschnürung des Befestigungselementes eingeschnappt. Das Befestigungselement kann in kostengünstiger Weise als einteiliges Spritzgussteil hergestellt werden. Eine einfache und schnelle Montage der Trägerbaugruppe erfolgt durch Schnappverbindungen des Befestigungselementes sowohl mit der Trägerplatte als auch mit dem Kühlblech. Hierdurch lassen sich Montageabstände zwischen Trägerplatte und Kühlblech von 2,5 mm bis 3,0 mm erreichen.

In einer vorteilhaften Ausführungsform des erfindungsgemäßen Signalgebers umfasst ein Befestigungselement einen die erste Durchmessereinschnürung aufweisenden Kopfabschnitt sowie einen dünneren Schaftabschnitt, der im Übergang zum Kopfabschnitt die zweite Durchmessereinschnürung aufweist. Mit dem dünneren Schaftabschnitt wird das Befestigungselement durch die erste Montageöffnung geführt, bis deren Rand in die erste Durchmessereinschnürung einschnappt. Anschließend wird der Schaftabschnitt des Befestigungselementes durch die zweite Montageöffnung in der Trägerplatte geführt, bis deren Rand in die zweite Durchmessereinschnürung einschnappt. Indem die zweite Durchmessereinschnürung im Übergang zum Kopfabschnitt des Befestigungselementes liegt, kann durch die Höhe des Kopfabschnittes der Montageabstand vorgegeben werden.

In einer bevorzugten Ausgestaltung des erfindungsgemäßen Signalgebers weist die erste Montageöffnung eine kegelförmige Senkung auf, in der das Befestigungselement mit einer kegelförmigen Erweiterung des Kopfabschnittes ohne Überstand versenkt sitzt. Hierdurch werden störende Überstände des Befestigungselementes auf der der Trägerplatte abgewandten Seite des Kühlbleches vermieden. Insbesondere wird hierdurch ein direktes Aufliegen des Kühlbleches auf dem Innengehäuse möglich, was zu einer verbesserten Wärmeabfuhr aus dem Innengehäuse führt.

In einer anderen bevorzugten Ausgestaltung des erfindungsgemäßen Signalgebers weist die erste Montageöffnung eine zylinderförmige Senkung auf, in der das Befestigungselement mit einer zylinderförmigen Erweiterung des Kopfabschnittes ohne Überstand versenkt sitzt. Auch hier werden störende Überstände des Befestigungselementes vermieden, um die mit einer direkten Auflage des Kühlbleches auf dem Innengehäuse verbundene verbesserte Wärmeabfuhr zu ermöglichen.

In einer vorteilhaften Ausgestaltung des erfindungsgemäßen Signalgebers weist der Kopfabschnitt im Bereich zwischen Kühlblech und Trägerplatte eine ballige Durchmessererweiterung auf, wobei die erste Durchmessereinschnürung zwischen dieser und der kegel- oder zylinderförmigen Erweiterung des Kopfabschnittes angeordnet ist. So kann die ballige Durchmessererweiterung als ringförmige Wulst am an sich zylindrischen Kopfabschnitt angeformt sein, deren Durchmesser etwas größer ist als die erste Montageöffnung. Beim Durchführen des Befestigungselementes durch die erste Montageöffnung wird die ballige Durchmessererweiterung durch den Rand der ersten Montageöffnung komprimiert, um sich nach Durchführung wieder auszudehnen. Das Kühlblech ist nun axial in einer Schnappverbindung zwischen der balligen Durchmessererweiterung einerseits und der kegel- oder zylinderförmigen Erweiterung des Kopfabschnittes andererseits arretiert.

Vorzugsweise ist der Kopfabschnitt wenigstens im Bereich der balligen Durchmessererweiterung hohlzylindrisch ausgebildet. Hierdurch ist eine Komprimierung der Durchmessererweiterung beim Durchführen durch die erste Montageöffnung erleichtert, da das durch den Rand der ersten Montageöffnung verdrängte Material des Kopfabschnittes nach innen ausweichen kann.

In einer bevorzugten Ausführungsform des erfindungsgemäßen Signalgebers weist der Kopfabschnitt wenigstens ein Federelement auf, dessen freies Ende bei Durchführung des Befestigungselementes durch die erste Montageöffnung von deren Rand federelastisch nach innen biegbar ist und nach Durchführung sich im Bereich des Randes der ersten Montageöffnung gegen das Kühlblech stützt. In dieser zur balligen Durchmessererweiterung des Kopfabschnittes alternativen Ausführung muss der Kopfabschnitt nicht hohlzylindrisch ausgebildet sein, sondern je Federelement eine Nut aufweisen, in die das Federelement bei Durchführung durch die erste Montageöffnung nach innen biegbar ist. Nach Durchführung durch die erste Montageöffnung kehrt das Federelement in seine ursprüngliche, leicht ausgestellte Lage zurück, in der sich das freie Ende des Federelementes im Bereich des Randes der ersten Montageöffnung gegen das Kühlblech stützt. In dieser Schnappverbindung ist das Kühlblech axial einerseits durch die kegel- oder zylinderförmige Erweiterung des Kopfabschnittes und andererseits durch die freien Enden der Federelemente arretiert.

In einer weiteren vorteilhaften Ausführungsform des erfindungsgemäßen Signalgebers umfasst der Schaftabschnitt eine Mehrzahl an von einer Stirnfläche des Kopfabschnittes bis zu einer Schaftspitze verlaufende und je eine radiale Ausknickung aufweisende Federstege, die bei Durchführung des Befestigungselementes durch die zweite Montageöffnung von deren Rand federelastisch nach innen biegbar sind und die nach Durchführung sich an den Rand der zweiten Montageöffnung legen, wobei die zweite Durchmessereinschnürung zwischen Kopfteil und Ausknickung der Federstege angeordnet ist. Der Schaftabschnitt des Befestigungselementes wird durch die zweite Montageöffnung hindurchgeführt, bis die Trägerplatte an der Stirnfläche des Kopfabschnittes aufliegt. Hierdurch ist aufgrund der Höhe des Kopfabschnittes sichergestellt, dass der Montageabstand zwischen Trägerplatte und Kühlblech eingehalten ist. Die Federstege verlaufen ausgehend vom Kopfabschnitt in Richtung Schaftspitze zunächst radial leicht nach außen bis zur Ausknickung, um dann bis zur Schaftspitze wieder radial leicht nach innen zu verlaufen. Die Ausknickungen der Federstege können radial nach innen in einen zentralen Hohlraum gebogen werden, damit der Schaftabschnitt durch die zweite Montageöffnung führbar ist. In der Schnappverbindung zwischen dem Befestigungselement und der Trägerplatte ist letztere axial zwischen der Stirnfläche des Kopfabschnittes und den Ausknickungen der Federelemente arretiert.

Vorzugsweise weist der Schaftabschnitt wenigstens eine Federzunge mit einem Sperrabsatz auf, deren freies Ende bei Durchführung des Befestigungselementes durch die zweite Montageöffnung von deren Rand federelastisch nach innen biegbar ist und deren Sperrabsatz sich nach Durchführung im Bereich des Randes der zweiten Montageöffnung gegen die Trägerplatte stützt. Der Sperrabsatz der Federzunge stellt ein zusätzliches formschlüssiges Arretiermittel der Schnappverbindung zwischen Befestigungselement und Trägerplatte dar.

In einer weiteren bevorzugten Ausgestaltung des erfindungsgemäßen Signalgebers liegt das Kühlblech mit seiner der Treiberbaugruppe abgewandten Fläche auf dem Innengehäuse auf, wobei zwischen Kühlblech und Trägerplatte eine Wärmeleiteinlage angeordnet ist. Die Wärmeleiteinlage besitzt einen geringen Wärmewiderstand, ist aber gegen die Lötseite der Trägerplatte elektrisch isoliert. Hierdurch wird das Wärmeableitvermögen des erfindungsgemäßen Signalgebers weiter verbessert.

Weitere Eigenschaften und Vorteile des erfindungsgemäßen Signalgebers ergeben sich aus nachfolgender Beschreibung eines Ausführungsbeispiels anhand der Zeichnungen, in deren
- FIG 1: ein Teilschnitt eines erfindungsgemäßen Signalgebers im Bereich seiner Treiberbaugruppe,
- FIG 2: mit Befestigungselementen verbundene Trägerplatte und Kühlblech in perspektivischer Darstellung,
- FIG 3: ein erstes Ausführungsbeispiel eines Befestigungselementes im Montagezustand,
- FIG 4: ein zweites Ausführungsbeispiel eines Befestigungselementes im Montagezustand und
- FIG 5: ein drittes Ausführungsbeispiel eines Befestigungselementes im Montagezustand
schematisch veranschaulicht sind.

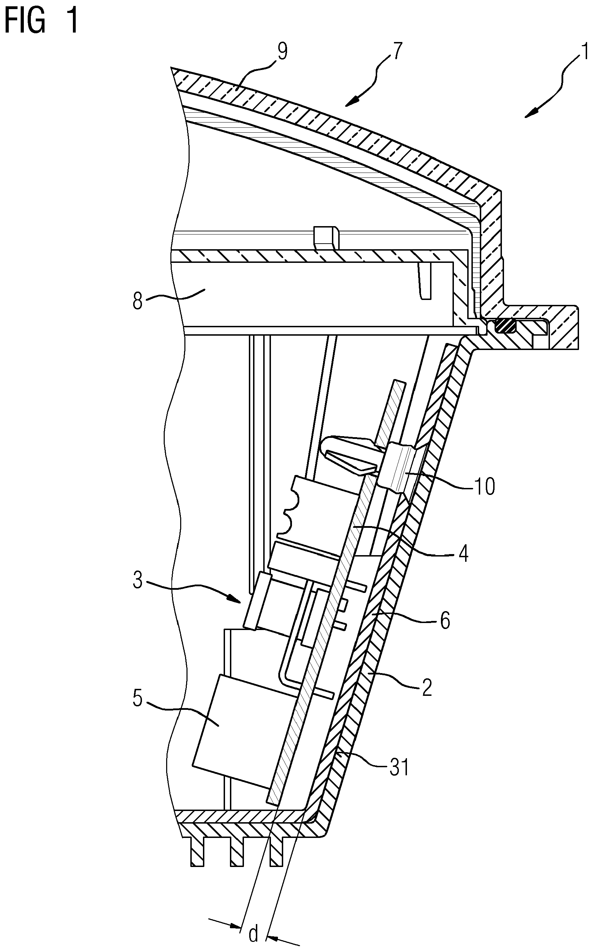

Gemäß FIG 1 weist ein erfindungsgemäßer Signalgeber 1 ein topfförmiges Innengehäuse 2 mit einer Frontöffnung auf, die durch einen Optikaufsatz 7 verschlossen ist. Im Innengehäuse 2 ist eine nicht dargestellte Lichtquelle mit wenigstens einer Leuchtdiode angeordnet. Zur Energieversorgung der Lichtquelle ist im Innengehäuse 2 ferner eine Treiberbaugruppe 3 angeordnet, deren Trägerplatte 4 mit elektronischen Bauteilen, unter anderem mit einem Transformator 5 sowie Schaltdioden, -transistoren und -spulen eines Wärme produzierenden Leistungsteils aber auch mit einem temperaturempfindlichen Kondensator zur Stromglättung und Pufferung bestückt ist. Zur Wärmeabfuhr ist das Innengehäuse 2 wenigstens teilweise mit einem Kühlblech 6 ausgekleidet. Der die Frontöffnung des Innengehäuses 2 dicht verschließende Optikaufsatz 7 weist eine innere Fresnel-Linse 8 sowie eine äußere Streulinse 9 auf. Dazwischen kann eine Symbolmaske, beispielsweise ein Fußgängersymbol, angeordnet sein. Ein derartiger Signalgeber 1 kann ein nicht dargestelltes Außengehäuse umfassen, in welches das Innengehäuse 2 eingesetzt ist. Mehrere vertikal aneinander gereihte Signalgeber 1 ergeben eine mehrfeldige bzw. mehrbegriffige Signaleinrichtung, die Freigabe- oder Sperrsignale an herannahende Verkehrsteilnehmer abgeben kann.

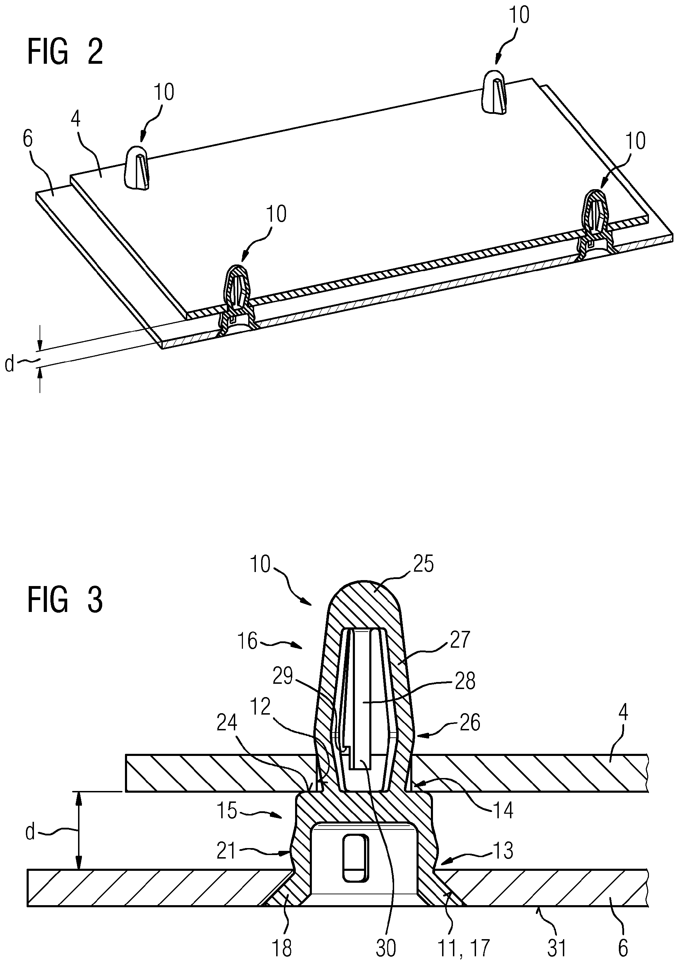

Zum optimalen Wärmeabtransport ist die Treiberbaugruppe 3 derart zu befestigen, dass deren Trägerplatte 4 in einem möglichst geringen Montageabstand d von etwa 2,5 mm bis 3,0 mm parallel zum Kühlblech 6 gehalten ist. Ferner ist das Kühlblech 6 mit einem möglichst großflächigen Kontakt an das Innengehäuse 2 anzubringen. Hierfür sind die erfindungsgemäßen Befestigungselemente 10 vorgesehen, die im Einzelnen mit Verweis auf FIG 2 bis FIG 5 nachfolgend beschrieben werden.

Gemäß FIG 2 ist die Trägerplatte 4 parallel zum Kühlblech 6 durch beispielsweise vier Befestigungselemente 10 im vorgegebenen Montageabstand d gehalten.

Jedes Befestigungselement 10 durchsetzt dabei gemäß FIG 3 bis FIG 5 eine erste Montageöffnung 11 im Kühlblech 6 sowie eine zweite Montageöffnung 12 in der Trägerplatte 4, welche zur ersten Montageöffnung 11 koaxial liegt und im Bohrungsdurchmesser kleiner ist. Das Befestigungselement 10 ist aus einem elastischen Kunststoff in Form eines einstückigen Spritzgussteils hergestellt und weist einen zylindrischen Kopfabschnitt 15 sowie einen sich an diesen anschließenden dünneren, länglichen Schaftabschnitt 16 auf. Die Befestigung der Trägerplatte 4 und des Kühlblechs 6 am Befestigungselement 10 erfolgt über Schnappverbindungen, wozu das Befestigungselement 10 eine erste Durchmessereinschnürung 13 und eine zweite Durchmessereinschnürung 14 aufweist, in die ein Rand der ersten Montageöffnung 11 beziehungsweise ein Rand der zweiten Montageöffnung 12 einschnappt. Die erste Durchmessereinschnürung 13 ist dabei im Kopfabschnitt 15, während die zweite Durchmessereinschnürung 14 im Übergangsbereich vom Kopfabschnitt 15 in den Schaftabschnitt 16 angeordnet ist.

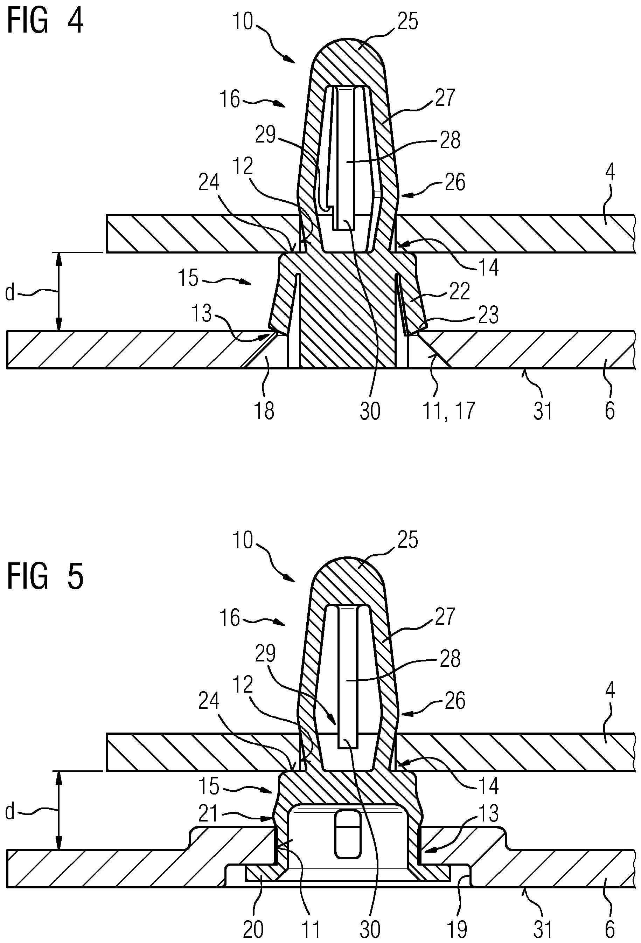

Zur Vermeidung eines störenden Überstandes des Befestigungselementes 10 auf der der Treiberbaugruppe 3 abgewandten Fläche 31 des Kühlblechs 6 weist das Kühlblech 6 eine Senkung 17 bzw. 19 auf, in der das Befestigungselement 10 mit einer Erweiterung 18 bzw. 20 des Kopfabschnittes 15 ohne Überstand versenkt sitzt. Der bündige Abschluss des Befestigungselementes 10 mit der Fläche 31 wird in den Ausführungsbeispielen gemäß FIG 3 und FIG 4 durch eine kegelförmige Senkung 17 der ersten Montageöffnung 11 erreicht, in der eine kegelförmige Erweiterung 18 des Kopfabschnittes 15 sitzt. Im Ausführungsbeispiel gemäß FIG 5 weist die erste Montageöffnung 11 eine zylinderförmige Senkung 19 auf, in der eine zylinderförmige Erweiterung 20 des Kopfabschnittes 15 sitzt.

In den Ausführungsformungen des Befestigungselementes 10 gemäß FIG 3 und FIG 5 weist der Kopfabschnitt 15 im Bereich zwischen Kühlblech 6 und Trägerplatte 4 eine ballige Durchmessererweiterung 21 auf. Die Durchmessererweiterung 21 kann als ringförmige Wulst ausgebildet sein. Zwischen der balligen Durchmessererweiterung 21 und der kegelförmigen oder zylinderförmigen Erweiterung 18 bzw. 20 weist der Kopfabschnitt 15 die erste Durchmessereinschnürung 13 auf, in die der Rand der ersten Montageöffnung 11 einschnappt. Damit die ballige Durchmessererweiterung 21 beim Durchführen durch die erste Montageöffnung 11 leichter komprimiert werden kann, ist der Kopfabschnitt 15 hohlzylindrisch ausgebildet.

In dem in FIG 4 dargestellten Ausführungsbeispiel weist der Kopfabschnitt 15 des Befestigungselementes 10 wenigstens ein, vorzugsweise zwei oder vier Federelemente 22 auf, deren freie Enden 23 bei Durchführung des Befestigungselementes 10 durch die erste Montageöffnung 11 von deren Rand federelastisch nach innen biegbar sind. Nach Durchführung nehmen die Federelemente 22 ihre entspannte Lage ein, in welcher sich deren freie Enden 23 im Bereich des Randes der ersten Montageöffnung 11 gegen das Kühlblech 6 stützen. Bei dieser Ausführung der Schnappverbindung liegt die erste Durchmessereinschnürung 13 zwischen der kegelförmigen Erweiterung 18 des Kopfabschnittes 15 und den leicht nach außen gestellten freien Enden 23 der Federelemente 22.

Zur Befestigung der Trägerplatte 4 der Treiberbaugruppe 3 weist der Schaftabschnitt 16 des Befestigungselementes 10 eine Mehrzahl, vorzugsweise drei, von einer Stirnfläche 24 des Kopfabschnittes 15 bis zu einer Schaftspitze 25 verlaufende Federstege 27 auf. Die Federstege 27 weisen jeweils eine radiale Ausknickung 26 auf, wobei jeder Federsteg 27, ausgehend von der Stirnfläche 24, zunächst bis zur Ausknickung 26 radial leicht nach außen verläuft, um nach der Ausknickung 26 bis hin zur Schaftspitze 25 wieder radial leicht nach innen zu verlaufen. Im entspannten Zustand liegen die Ausknickungen 26 auf einem Umkreis, dessen Durchmesser größer ist als der der zweiten Montageöffnung 12. Zwischen den Ausknickungen 26 und der Stirnfläche 24 des Kopfabschnittes 15 ist die zweite Durchmessereinschnürung 14 gebildet, in die der Rand der zweiten Montageöffnung 12 der Trägerplatte 4 einschnappt. Hierzu werden bei Durchführung des Schaftabschnittes 16 durch die zweite Montageöffnung 12 die Ausknickungen 26 der Federstege 27 federelastisch nach innen gebogen, um nach Durchführung sich an den Rand der zweiten Montageöffnung 12 zu legen. Die Trägerplatte 4 liegt im eingeschnappten Zustand auf der Stirnfläche 24 des Kopfabschnittes 15 auf. Damit bestimmt die Höhe des Kopfabschnittes 15 den Montageabstand d zwischen Trägerplatte 4 und Kühlblech 6. Zur zusätzlichen Arretierung der Trägerplatte 4 im eingeschnappten Zustand weist der Schaftabschnitt 16 wenigstens eine Federzunge 28 mit einem Sperrabsatz 29 auf, deren freies Ende 30 bei Durchführung des Befestigungselementes 10 durch die zweite Montageöffnung 12 von deren Rand federelastisch nach innen biegbar ist. Nach Durchführung stützt sich der Sperrabsatz 29 im Bereich des Randes der zweiten Montageöffnung 12 gegen die Trägerplatte 4.

Der Kern der vorliegenden Erfindung ist nicht auf die Anwendung in einem Signalgeber einer Lichtsignalanlage eingeschränkt. Vielmehr können die beschriebenen Ausführungsbeispiele von Befestigungselementen auch in anderen elektronischen Geräten zur Befestigung von Flachbaugruppen an Blechen verwendet werden. In gleicher Weise werden die Trägerplatte der Flachbaugruppe und das Blech über Schnappverbindungen am Befestigungselement arretiert, wobei geringe Montageabstände zwischen Trägerplatte und Blech eingehalten und Überstände des Befestigungselements auf der der Flachbaugruppe abgewandten Seite des Bleches vermieden werden.

## Patentansprüche

1. Signalgeber (1) zur Abgabe eines Lichtsignals für den Straßen- oder Schienenverkehr, umfassend ein topfförmiges Innengehäuse (2) mit einer Frontöffnung, in welchem eine Lichtquelle mit wenigstens einer Leuchtdiode, eine Treiberbaugruppe (3) zur Energieversorgung der Lichtquelle und ein das Innengehäuse (2) wenigstens teilweise auskleidendes Kühlblech (6) zur Wärmeabfuhr angeordnet sind, und einen die Frontöffnung verschließenden Optikaufsatz (7) zur Beeinflussung des von der Lichtquelle emittierten Lichtes, **dadurch gekennzeichnet, dass** eine Trägerplatte (4) der Treiberbaugruppe (3) durch wenigstens ein Befestigungselement (10) in einem vorgegebenen Montageabstand (d) parallel zum Kühlblech (6) gehalten ist, wobei das Befestigungselement (10) eine erste Montageöffnung (11) im Kühlblech (6) sowie eine kleinere zweite Montageöffnung (12) in der Trägerplatte (4) durchsetzt und aus einem derart elastischen Kunststoff besteht, dass das Kühlblech (6) mit einem Rand der ersten Montageöffnung (11) in einer ersten Durchmessereinschnürung (13) und die Trägerplatte (4) mit einem Rand der zweiten Montageöffnung (12) in einer zweiten Durchmessereinschnürung (14) des Befestigungselementes (10) eingeschnappt sind.

2. Signalgeber (1) nach Anspruch 1, wobei ein Befestigungselement (10) einen die erste Durchmessereinschnürung (13) aufweisenden Kopfabschnitt (15) sowie einen dünneren Schaftabschnitt (16) umfasst, der im Übergang zum Kopfabschnitt (15) die zweite Durchmessereinschnürung (14) aufweist.

3. Signalgeber (1) nach Anspruch 2, wobei die erste Montageöffnung (11) eine kegelförmige Senkung (17) aufweist, in der das Befestigungselement (10) mit einer kegelförmigen Erweiterung (18) des Kopfabschnittes (15) ohne Überstand versenkt sitzt.

4. Signalgeber (1) nach Anspruch 2, wobei die erste Montageöffnung (11) eine zylinderförmige Senkung (19) aufweist, in der das Befestigungselement (10) mit einer zylinderförmigen Erweiterung (20) des Kopfabschnittes (15) ohne Überstand versenkt sitzt.

5. Signalgeber (1) nach Anspruch 3 oder 4, wobei der Kopfabschnitt (15) im Bereich zwischen Kühlblech (6) und Trägerplatte (4) eine ballige Durchmessererweiterung (21) aufweist, wobei die erste Durchmessereinschnürung (13) zwischen dieser und der kegel- oder zylinderförmigen Erweiterung (18 oder 20) des Kopfabschnittes (15) angeordnet ist.

6. Signalgeber (1) nach Anspruch 5, wobei der Kopfabschnitt (15) wenigstens im Bereich der balligen Durchmessererweiterung (21) hohlzylindrisch ausgebildet ist.

7. Signalgeber (1) nach Anspruch 3 oder 4, wobei der Kopfabschnitt (15) wenigstens ein Federelement (22) aufweist, dessen freies Ende (23) bei Durchführung des Befestigungselementes (10) durch die erste Montageöffnung (11) von deren Rand federelastisch nach innen biegbar ist und nach Durchführung sich im Bereich des Randes der ersten Montageöffnung (11) gegen das Kühlblech (6) stützt.

8. Signalgeber (1) nach einem der Ansprüche 2 bis 7, wobei der Schaftabschnitt (16) eine Mehrzahl an von einer Stirnfläche (24) des Kopfabschnittes (15) bis zu einer Schaftspitze (25) verlaufende und je eine radiale Ausknickung (26) aufweisende Federstege (27) umfasst, die bei Durchführung des Befestigungselementes (10) durch die zweite Montageöffnung (12) von deren Rand federelastisch nach innen biegbar sind und die nach Durchführung sich an den Rand der zweiten Montageöffnung (12) legen, wobei die zweite Durchmessereinschnürung (14) zwischen Kopfteil (15) und Ausknickung (26) der Federstege (27) angeordnet ist.

9. Signalgeber (1) nach Anspruch 8, wobei der Schaftabschnitt (16) wenigstens eine Federzunge (28) mit einem Sperrabsatz (29) aufweist, deren freies Ende (30) bei Durchführung des Befestigungselementes (10) durch die zweite Montageöffnung (12) von deren Rand federelastisch nach innen biegbar ist und deren Sperrabsatz (29) sich nach Durchführung im Bereich des Randes der zweiten Montageöffnung (12) gegen die Trägerplatte (4) stützt.

10. Signalgeber (1) nach einem der Ansprüche 1 bis 9, wobei das Kühlblech (6) mit seiner der Treiberbaugruppe (3) abgewandten Fläche (31) auf dem Innengehäuse (2) aufliegt und wobei zwischen Kühlblech (6) und Trägerplatte (4) eine Wärmeleiteinlage angeordnet ist.

## Claims

1. Signal transmitter (1) for dispensing a light signal for road or rail traffic, comprising a cup-shaped inner housing (2) with a front opening, in which are arranged a light source with at least one light-emitting diode, a driver assembly (3) for supplying energy to the light source and a cooling plate (6) at least partially lining the inner housing (2) for discharging heat, and an optics attachment (7) which closes the front opening for influencing the light emitted by the light source, **characterised in that** a support plate (4) of the driver assembly (3) is held by at least one fastening element (10) at a predetermined assembly distance (d) parallel to the cooling plate (6), wherein the fastening element (10) penetrates a first assembly opening (11) in the cooling plate (6) and a smaller second assembly opening (12) in the support plate (4) and consists of an elastic plastic of such a type that the cooling plate (6) with an edge of the first assembly opening (11) and the support plate (4) with an edge of the second assembly opening (12) are snap fitted into a first diameter restriction (13) and into a second diameter restriction (14) of the fastening element (10) in each case.

2. Signal transmitter (1) according to claim 1, wherein a fastening element (10) comprises a head section (15) having the first diameter restriction (13) and a thinner shaft section (16), which has the second diameter restriction (14) in the transition to the head section (15).

3. Signal transmitter (1) according to claim 2, wherein the first assembly opening (11) has a conical depression (17), in which the fastening element (10) with a conical expansion (18) of the head section (15) is countersunk without overhang.

4. Signal transmitter (1) according to claim 2, wherein the first assembly opening (11) has a cylindrical depression (19), in which the fastening element (10) with a cylindrical expansion (20) of the head section (15) is countersunk without overhang.

5. Signal transmitter (1) according to claim 3 or 4, wherein in the region between the cooling plate (6) and the support plate (4) the head section (15) has a spherical diameter expansion (21), wherein the first diameter restriction (13) is arranged between this and the conical or cylindrical expansion (18 or 20) of the head section (15).

6. Signal transmitter (1) according to claim 5, wherein the head section (15) is embodied to be hollow cylindrical at least in the region of the spherical diameter expansion (21).

7. Signal transmitter (1) according to claim 3 or 4, wherein the head section (15) has at least one spring element (22), the free end (23) of which can be bent inwards in a spring-elastic manner from its edge when the fastening element (10) is guided through the first assembly opening (11) and braces against the cooling plate (6) in the region of the edge of the first assembly opening (11) after being guided through.

8. Signal transmitter (1) according to one of claims 2 to 7, wherein the shaft section (16) comprises a plurality of spring webs (27) which run from a front face (24) of the head section (15) as far as a shaft peak (25) and have a radial buckling (26) in each case, which spring webs (27) can be bent inwards in a spring-elastic manner from their edge when the fastening element (10) is guided through the second assembly opening (12) and then rest against the edge of the second assembly opening (12) after being guided through, wherein the second diameter restriction (14) is arranged between the head part (15) and buckling (26) of the spring webs (27).

9. Signal transmitter (1) according to claim 8, wherein the shaft section (16) has at least one spring tongue (28) with a locking step (29), the free end (30) of which can be bent inwards in a spring-elastic manner from its edge when the fastening element (10) is guided through the second assembly opening (12) and the locking step (29) of which braces against the support plate (4) after being guided through in the region of the edge of the second assembly opening (12).

10. Signal transmitter (1) according to one of claims 1 to 9, wherein the cooling plate (6) with its surface (31) facing away from the driver assembly (3) rests on the inner housing (2) and wherein a heat-conducting inlay is arranged between the cooling plate (6) and support plate (4).

## Revendications

1. Emetteur (1) d'un signal lumineux pour la circulation routière ou ferroviaire, comprenant un boîtier (2) intérieur en forme de pot, qui a une ouverture frontale et dans lequel sont logés une source lumineuse ayant au moins une diode électroluminescente, un module (3) pilote pour alimenter en énergie la source lumineuse et pour l'évacuation de la chaleur, une tôle (6) de refroidissement habillant, au moins en partie, le boîtier intérieur et un chapeau (7) optique fermant l'ouverture frontale pour influencer la lumière émise par la source lumineuse, **caractérisé en ce qu'**une plaque (4) de support du module (3) pilote est maintenue parallèlement à la tôle (6) de refroidissement à une distance (d) de montage donnée à l'avance par au moins un élément (10) de fixation, l'élément (10) de fixation passant dans une première ouverture (11) de montage de la tôle (6) de refroidissement, ainsi que dans une deuxième ouverture (12) de montage plus petite de la plaque (4) de support et étant en une matière plastique élastique, de manière à encliqueter la tôle (6) de refroidissement avec un bord de la première ouverture (11) de montage en un premier étranglement (13) de diamètre et la plaque de support avec un bord de la deuxième ouverture (12) de montage en un deuxième étranglement (14) de diamètre.

2. Emetteur (1) de signal suivant la revendication 1, dans lequel un élément (10) de fixation comprend une partie (15) de tête ayant le premier étranglement (13) de diamètre, ainsi qu'une partie (16) de fût plus mince, qui a le deuxième étranglement (14) de diamètre dans la transition à la partie (15) de tête.

3. Emetteur (1) de signal suivant la revendication 2, dans lequel la première ouverture (11) de montage a un puits (17) de forme conique, dans lequel l'élément (10) de fixation est noyé sans dépassement par un élargissement (18) de forme conique de la partie (15) de tête.

4. Emetteur (1) de signal suivant la revendication 2, dans lequel la première ouverture (11) de montage a un puits (19) de forme cylindrique, dans lequel l'élément (10) de fixation est noyé sans dépassement par un élargissement (20) de forme cylindrique de la partie (15) de tête.

5. Emetteur (1) de signal suivant la revendication 3 ou 4, dans lequel la partie (15) de tête a, dans la région comprise entre la tôle (6) de refroidissement et la plaque (4) de support, un élargissement (21) de diamètre bombé, le premier étranglement (13) de diamètre étant disposé entre celui-ci et l'élargissement (18 ou 20) de forme conique ou cylindrique de la partie (15) de tête.

6. Emetteur (1) de signal suivant la revendication 5, dans lequel la partie (15) de tête est constituée sous la forme d'un cylindre creux, au moins dans la région de l'élargissement (21) de diamètre bombé.

7. Emetteur (1) de signal suivant la revendication 3 ou 4, dans lequel la partie (15) de tête a au moins un élément (22) de ressort, dont l'extrémité (23) libre peut être courbée vers l'intérieur, d'une manière élastique comme un ressort, lors du passage de l'élément (10) de fixation dans la première ouverture (11) de montage, par le bord de celle-ci et, après le passage, s'appuie dans la région du bord de la première ouverture (11) de montage sur la tôle (6) de refroidissement.

8. Emetteur (1) de signal suivant l'une des revendications 2 à 7, dans lequel la partie (16) de fût comprend une pluralité de barrettes à ressort s'étendant d'une surface (24) frontale de la partie (15) de tête jusqu'à une pointe (25) du fût et ayant respectivement une inflexion (26) sortant radialement, barrettes, qui, lors du passage de l'élément (10) de fixation dans la deuxième ouverture (12) de montage, peuvent être courbées vers l'intérieur, d'une manière élastique comme un ressort, par le bord de celle-ci et qui, après le passage, s'applique au bord de la deuxième ouverture de montage, le deuxième étranglement (14) de diamètre étant disposé entre la partie (15) de tête et l'inflexion (26) sortante des barrettes (27) à ressort.

9. Emetteur (1) de signal suivant la revendication 8, dans lequel la partie (16) de fût a au moins une languette (28) à ressort ayant un ressaut (29) de blocage, dont l'extrémité (30) libre peut, lors du passage de l'élément (10) de fixation dans la deuxième ouverture (12) de montage, être courbée vers l'intérieur, d'une manière élastique comme un ressort, par le bord de celle-ci et dont le ressaut (29) de blocage sur la plaque (4) de support dans la région du bord de la deuxième ouverture (12) de montage.

10. Emetteur (1) de signal suivant l'une des revendications 1 à 9, dans lequel la tôle (6) de refroidissement s'applique par sa surface (31) éloignée du module (3) pilote au boîtier (2) intérieur et dans lequel un insert conducteur de la chaleur est disposé entre la tôle (6) de refroidissement et la plaque (4) de support.
